# FASCICULE DE BREVET EUROPEEN

(11) **EP 3 074 199 B1**
(45) Date de publication et mention de la délivrance du brevet: **10.04.2019**
(21) Numéro de dépôt: 14808556.6
(22) Date de dépôt: 27.11.2014
(51) Int. Cl.: B29D 30/00, B29D 30/38, B29B 15/12, B29C 59/14, B29C 71/02, B29C 37/02, B29L 30/00, B29K 61/00, B29K 33/04, B29K 77/00

(54) **PROCÉDÉ DE TRAITEMENT D'UN ÉLÉMENT DE RENFORT À SECTION**
VERFAHREN ZUR BEHANDLUNG EINES VERSTÄRKUNGSELEMENTS
METHOD FOR THE TREATMENT OF A REINFORCING ELEMENT

(30) Priorité: 28.11.2013 FR 1361728
(43) Date de publication de la demande: 05.10.2016
(73) Titulaire: Compagnie Générale des Etablissements Michelin, 63000 Clermont-Ferrand (FR)
(72) Inventeur: DOISNEAU, David, F-63040 Clermont-Ferrand Cedex 9 (FR); DAJOUX, Nicole, F-63040 Clermont-Ferrand Cedex 9 (FR); LE CLERC, Christophe, F-63040 Clermont-Ferrand Cedex 9 (FR); GUY, Thomas, F-63040 Clermont-Ferrand Cedex 9 (FR)
(74) Mandataire: Desbordes, Guillaume
(86) Numéro de dépôt international: PCT/EP2014/075747
(87) Numéro de publication internationale: WO 2015/078946

(56) Documents cités:
- EP-A1- 0 172 057
- EP-A1- 1 514 894
- EP-A2- 0 451 425
- WO-A1-87/03021
- WO-A1-94/28568
- DE-A1- 3 636 395
- US-A- 3 853 657
- US-A- 4 606 930
- US-A1- 2013 059 494

## Description

L'invention a pour objet un procédé de traitement d'un élément de renfort et un procédé de fabrication d'un pneumatique.

L'invention s'applique à des véhicules de tourisme, des véhicules à deux roues, des véhicules industriels choisis parmi des camionnettes, véhicules lourds tels que "Poids lourd" - i.e., métro, bus, engins de transport routier (camions, tracteurs, remorques), véhicules hors-la-route -, engins agricoles ou de génie civil, aéronef, autres véhicules de transport ou de manutention.

On connait des documents WO2010/115860 et WO2010/115861, un pneumatique pour véhicule de tourisme comprenant une armature de carcasse ancrée dans deux bourrelets et surmontée radialement par une armature de sommet elle-même surmontée d'une bande de roulement qui est réunie aux bourrelets par deux flancs.

Dans un tel pneumatique, l'armature de sommet comprend une armature de travail comprenant des éléments de renfort noyés dans une matrice d'élastomère. Chaque élément de renfort présente une section de forme générale aplatie et s'étend selon une direction principale. Les éléments de renfort sont sensiblement parallèles les uns aux autres selon une direction sensiblement parallèle à la direction principale. Chaque élément de renfort est en polyéthylène téréphtalate (PET).

Lors d'une faible sollicitation (1° de dérive) du pneumatique en virage, on a observé que la rigidité ou poussée de dérive (en anglais, "drift thrust" ou "cornering") n'était pas altérée par rapport à des éléments de renfort classiques comprenant des câbles métalliques ou textiles. Toutefois, lors de fortes sollicitations (supérieures à 5° de dérive), on a observé que la rigidité ou poussée de dérive du pneumatique de l'état de la technique était altérée, certes de façon minime mais que cette altération était significative et était susceptible de rendre le comportement routier ("handling") du pneumatique moins performant.

On connaît de l'état de la technique des procédés de traitement au LASER notamment des documents WO87/03021, DE3636395 et des procédés de traitement au plasma, notamment du document US3853657.

L'invention a pour objet d'améliorer la rigidité ou poussée de dérive d'un pneumatique utilisant des éléments de renfort présentant une section de forme générale aplatie.

A cet effet, l'invention a pour objet un procédé de traitement d'un élément de renfort présentant une section de forme générale aplatie et s'étendant selon une direction principale et comprenant au moins un bord latéral en une composition polymérique comprenant un polymère thermoplastique, le bord latéral s'étendant selon une direction générale sensiblement parallèle à la direction principale. Le procédé selon l'invention comprend une étape de chauffage d'au moins une partie du bord latéral au cours de laquelle on soumet au moins une partie du bord latéral à un flux de plasma de façon à élever la température de la partie du bord latéral au-delà de la température de fusion du polymère thermoplastique.

Un plasma permet de générer, à partir d'un gaz soumis à une tension électrique, un flux thermique comprenant des molécules à l'état gazeux, des ions et des électrons.

L'élément de renfort obtenu grâce au procédé selon l'invention permet au pneumatique de présenter une rigidité ou poussée de dérive améliorée par rapport au pneumatique de l'état de la technique comme le montrent les tests comparatifs ci-après.

En outre, une des caractéristiques essentielles du procédé est l'utilisation d'un flux de plasma. En effet, l'application du flux de plasma sur le bord latéral permet d'éliminer les éventuelles arêtes présentes sur ce bord latéral avant application du plasma. Le bord latéral est donc dépourvu d'arête après application du flux de plasma.

Le bord latéral d'un élément de renfort présentant une section de forme générale aplatie est la portion du contour de l'élément de renfort s'étendant sur toute l'épaisseur de l'élément de renfort.

Par dépourvu d'arête, on entend que la surface latérale externe délimitant le bord latéral est une surface continue. En d'autres termes, la surface latérale externe ne présente aucun décrochement et aucune saillie formant une discontinuité sur la surface latérale externe.

En effet, de telles arêtes constitueraient des amorces de rupture du mélange adjacent, ces amorces apparaissant notamment lors des fortes sollicitations en dérive.

L'invention permet donc d'améliorer physico-chimiquement l'interface entre le mélange et l'élément de renfort et d'éviter que cette interface ne se dégrade en raison d'amorces de rupture.

En effet, les inventeurs à l'origine de l'invention expliquent a posteriori l'amélioration de la rigidité de dérive par la diminution du gradient de rigidité locale entre chaque élément de renfort et la matrice d'élastomère dans laquelle il est noyé, cette baisse de rigidité étant obtenue en modifiant par chauffage la structure du polymère thermoplastique. Ainsi, on réduit les forces de cisaillements entre l'élément de renfort et la matrice d'élastomère, notamment lors de fortes sollicitations en dérive du pneumatique.

Dans l'invention, la rigidité locale est la microdureté qui est mesurée par nanoindentation. La microdureté mesurée par nanoindentation est la résistance qu'un matériau oppose à la pénétration d'un indenteur indéformable vis-à-vis de ce matériau, dans ce matériau.

L'élément de renfort présente une section de forme générale aplatie, c'est-à-dire que la section présente deux dimensions s'étendant selon des directions sensiblement perpendiculaires l'une à l'autre et dont l'une est plus grande que l'autre. En d'autres termes, l'élément de renfort est plus large qu'épais. La section de l'élément de renfort est la section selon un plan de coupe sensiblement perpendiculaire à la direction principale de l'élément de renfort.

Des exemples de sections de forme générale aplatie sont des sections de forme oblongue, elliptique, ovale, rectangulaire, parallélogramme ou encore losange. De préférence, la section présente une forme générale rectangulaire.

La composition polymérique peut comporter des additifs ajoutés au polymère thermoplastique, notamment au moment de la mise en forme de ce dernier, ces additifs pouvant être par exemple des agents de protection contre le vieillissement, des plastifiants, des charges telles que silice, argile, talc, kaolin ou encore des fibres courtes ; des charges peuvent par exemple être utilisées pour rendre la surface de l'élément de renfort plus rugueux et contribuer ainsi à améliorer sa prise de colle et/ou son adhésion à la matrice d'élastomère.

La composition polymérique peut comprendre d'autres polymères que le polymère thermoplastique, par exemple d'autres polymères thermoplastiques ou des élastomères, ainsi que d'autres composants non polymériques.

L'élément de renfort est un élément tridimensionnel présentant une longueur G, une largeur L et une épaisseur E s'étendant chacune selon une direction générale sensiblement perpendiculairement aux directions générales selon lesquelles s'étendent les deux autres dimensions et dans lequel G>L>E.

Par définition, l'épaisseur de l'élément de renfort est l'encombrement, c'est-à-dire la dimension maximale de l'élément de renfort selon une direction sensiblement parallèle à la direction générale de l'épaisseur de l'élément de renfort.

Par définition, la largeur de l'élément de renfort est l'encombrement, c'est-à-dire la dimension maximale de l'élément de renfort selon une direction sensiblement parallèle à la direction générale de la largeur de l'élément de renfort.

De préférence, l'élément de renfort présente une forme générale aplatie présentant un rapport de forme supérieur ou égal à 5. Le rapport de forme est défini par le rapport de la largeur de l'élément de renfort sur l'épaisseur de l'élément de renfort. De préférence, le rapport de forme est supérieur ou égal à 10, plus préférentiellement à 20 et encore plus préférentiellement à 30.De préférence, on réalise l'étape de chauffage à pression atmosphérique, notamment, lorsque celle-ci est réalisée au moyen d'un flux de plasma. En outre, réaliser l'étape de chauffage à pression atmosphérique permet la mise en place d'une installation industrielle relativement simple et peu coûteuse contrairement à un procédé nécessitant une pression réduite et donc la mise en place d'une chambre dépressurisée.

De façon préférentielle ; le flux de plasma est généré au moyen d'une torche à plasma. La modification physique, engendrée par l'utilisation d'une torche à plasma, consiste en une amorphisation au moins partielle, c'est-à-dire une diminution du taux de cristallinité de la partie du bord exposée. Ainsi, cette partie du bord étant moins organisée, elle présente une microdureté moindre.

La torche à plasma permet, grâce à la puissance de son flux de plasma, d'arrondir les éventuelles arêtes présentes ou délimitant le bord latéral qui pourraient servir d'amorce de rupture de l'interface entre la matrice d'élastomère et l'élément de renfort.

De préférence, le plasma est du type plasma froid. Un tel plasma, également appelé plasma hors équilibre est tel que la température provient majoritairement du mouvement des électrons. Un plasma froid doit être distingué d'un plasma chaud, également appelé plasma thermique dans lequel les électrons, mais aussi les ions confèrent à ce plasma certaines propriétés, notamment thermiques, différentes de celles du plasma froid.

Avantageusement, le flux de plasma est généré à partir d'un gaz comprenant au moins un composant oxydant. Par composant oxydant, on entend tout composant susceptible d'augmenter le degré d'oxydation d'une ou plusieurs fonctions chimiques présentes dans la composition polymérique. De plus, la modification chimique, engendrée par l'utilisation du gaz comprenant au moins un composant oxydant, consiste en une augmentation de la polarité de la partie du bord exposée. Ainsi, cette partie du bord exposée est plus hydrophile ce qui améliore la mouillabilité du bord latéral. De plus, la partie du bord exposée porte des groupements polaires créés par le flux du plasma susceptibles de réagir chimiquement avec la matrice d'élastomère et une éventuelle colle d'adhésion.

Avantageusement, le composant oxydant est choisi parmi le dioxyde de carbone (CO₂), le monoxyde de carbone (CO), le sulfure d'hydrogène (H₂S), le sulfure de carbone (CS₂), le dioxygène (O₂), l'azote (N₂), le chlore (Cl₂), l'ammoniac (NH₃) et un mélange de ces composants. De préférence, le composant oxydant est choisi parmi le dioxygène (O₂), l'azote (N₂) et un mélange de ces composants. Plus préférentiellement, le composant oxydant est l'air.

De façon préférentielle, on fait défiler l'élément de renfort par rapport à une source de flux de plasma. Ainsi, on peut traiter de grandes quantités d'élément de renfort. L'homme du métier saura choisir la vitesse de défilement, l'intensité de la source de flux de plasma ainsi que la distance entre la source de flux de plasma et le bord latéral de façon à provoquer une augmentation de la température du bord latéral au-dessus de la température de fusion du polymère thermoplastique.

En particulier, dans le cas d'un flux de plasma, on pourra faire varier un très grand nombre de paramètres tels que la vitesse de défilement V, la distance D entre le bord latéral et un orifice de sortie du flux de plasma, le temps d'activation du plasma (« PCT » pour Plasma Cycle Time), la nature du gaz ou bien encore la fréquence de pulsation de la torche à plasma.

De préférence, postérieurement à l'étape de chauffage de la partie du bord latéral, on revêt l'élément de renfort d'une colle d'adhésion. La colle utilisée est par exemple du type RFL (Résorcinol-Formaldéhyde-Latex) ou par exemple, telle que décrite dans les publications WO2013017421, WO2013017422, WO2013017423.

De préférence, le polymère thermoplastique est semi-cristallin. Un polymère semi-cristallin comprend d'une part, des zones cristallines, et, d'autre part, des zones amorphes.

Avantageusement, le polymère thermoplastique est choisi parmi un polyester, un polyamide, une polycétone ou un mélange de ces matériaux et de préférence est un polyester. Des exemples de polyesters, sont le téréphtalate (PET), le polyéthylène naphthalate (PEN), le polybutylène téréphthalate (PBT), le polybutylène naphthalate (PBN), le polypropylène téréphthalate (PPT) ou le polypropylène naphthalate (PPN). Des exemples de polyamides sont par exemple les polyamides aliphatiques comme le nylon.

De préférence, l'élément de renfort présente une épaisseur allant de 0,05 à 1 mm, plus préférentiellement de 0,10 à 0,70 mm. Par exemple, des épaisseurs allant de 0,20 à 0,60 mm se sont révélées tout à fait convenir pour la plupart des utilisations.

Avantageusement, la largeur de l'élément de renfort est supérieure ou égale à 2,5 mm, de préférence à 5 mm et plus préférentiellement à 10 mm.

Dans un mode de réalisation préféré, l'élément de renfort est constitué d'un film en la composition polymérique.

De préférence, le film est étiré multiaxialement.

Tout film de la composition polymérique étiré multiaxialement, c'est-à-dire étiré, orienté dans plus d'une direction, est utilisable. De tels films étirés multiaxialement sont bien connus et utilisés essentiellement à ce jour notamment dans l'industrie de l'emballage. Ces films ainsi que leurs procédés d'obtention sont décrits dans de nombreux documents, par exemple GB2134442, DE3621205, US4876137, US4867937, US5409657 US2007/0031691 et WO2010/115861.

De préférence, le film présente, quelle que soit la direction de traction considérée, un module en extension supérieur à 500 MPa (notamment entre 500 et 4000 MPa), plus préférentiellement supérieur à 1000 MPa (notamment entre 1000 et 4000 MPa) et encore plus préférentiellement supérieur à 2000 MPa. Des valeurs de module E comprises entre 2000 et 4000 MPa sont particulièrement souhaitables, notamment pour le renforcement de pneumatiques.

Selon un mode de réalisation préférentiel, le film présente, quelle que soit la direction de traction considérée, une contrainte maximale en traction notée σₘₐₓ supérieure à 80 MPa (notamment entre 80 et 500 MPa), plus préférentiellement supérieure à 100 MPa (notamment entre 100 et 500 MPa. Des valeurs de contraintes σₘₐₓ supérieures à 150 MPa, en particulier comprises entre 150 et 500 MPa, sont particulièrement souhaitables, notamment pour le renforcement de pneumatiques.

Selon un autre mode préférentiel, quelle que soit la direction de traction considérée, le seuil de déformation plastique noté Yp (connu aussi sous le terme anglais de « Yield point ») du film est situé au-delà de 3% d'allongement, notamment entre 3 et 15 %. Des valeurs Yp au-delà de 4% ; en particulier entre 4 et 12%, sont particulièrement souhaitables, notamment pour le renforcement de pneumatiques.

Selon un autre mode préférentiel, quelle que soit la direction de traction considérée, le film présente un allongement à la rupture noté Ar qui est supérieur à 20% (notamment entre 20 et 200%), plus préférentiellement supérieur à 50%. Des valeurs de Ar comprises entre 30 et 200% sont particulièrement souhaitables, notamment pour le renforcement de pneumatiques.

Les propriétés mécaniques énoncées ci-dessus sont bien connues de l'homme du métier, déduites des courbes force-allongement, mesurées par exemple selon la norme ASTM D638-02 pour des bandes d'épaisseur supérieure à 1 mm, ou encore selon la norme ASTM D882-09 pour des feuilles fines ou films dont l'épaisseur est au plus égale à 1 mm ; les valeurs de module E et de contrainte σₘₐₓ ci-dessus, exprimées en MPa, sont calculées par rapport à la section initiale de l'éprouvette tractionnée.

Le film utilisé est de préférence du type stabilisé thermiquement, c'est-à-dire qu'il a subi, après étirage, un ou plusieurs traitements thermiques destinés de manière connue à limiter sa contraction (ou retrait) thermique à haute température ; de tels traitements thermiques peuvent consister notamment en des recuits, des trempes ou des combinaisons de tels recuits ou trempes.

Ainsi, et de préférence, le film utilisé présente, après 30 min à 150°C, une contraction relative de sa longueur qui est inférieure à 5%, de préférence inférieure à 3% (mesurée sauf précisions différentes selon ASTM D1204-08).

La température de fusion Tf du polymère thermoplastique est préférentiellement choisie supérieure à 100°C, plus préférentiellement supérieure à 150°C, en particulier supérieure 200°C notamment dans le cas de renforcement de pneumatiques.

Des exemples de films, notamment en PET étirés multiaxialement, sont les films PET bi-étirés commercialisés sous les dénominations « Mylar » et « Melinex » (société DuPont Teijin Films), ou encore « Hostaphan » (société Mistubishi Polyester Film).

L'invention permet d'obtenir un élément de renfort.

L'invention permet d'obtenir un élément composite comprenant au moins un élément de renfort tel que défini ci-dessus noyé dans une matrice d'élastomère.

Dans un mode de réalisation préféré, l'élément composite présente une forme générale de bande. La largeur L' et l'épaisseur E' de l'élément composite sont telles que L'>E', de préférence L'>10.E'. Dans un mode de réalisation, l'élément composite forme une bande pour convoyeur ou bien encore une courroie.

De préférence, l'élément composite comprend plusieurs éléments de renfort tels que définis ci-dessus noyés dans la matrice d'élastomère et agencés sensiblement parallèlement les uns aux autres selon une direction sensiblement parallèle à la direction principale.

La matrice d'élastomère est à base d'au moins un élastomère.

De préférence, l'élastomère est un élastomère diénique. De manière connue, les élastomères diéniques peuvent être classés dans deux catégories: "essentiellement insaturés" ou "essentiellement saturés". On entend par "essentiellement insaturé", un élastomère diénique issu au moins en partie de monomères diènes conjugués, ayant un taux de motifs ou unités d'origine diénique (diènes conjugués) qui est supérieur à 15% (% en moles) ; c'est ainsi que des élastomères diéniques tels que les caoutchoucs butyle ou les copolymères de diènes et d'alpha-oléfines type EPDM n'entrent pas dans la définition précédente et peuvent être notamment qualifiés d'élastomères diéniques "essentiellement saturés" (taux de motifs d'origine diénique faible ou très faible, toujours inférieur a 15%). Dans la catégorie des élastomères diéniques "essentiellement insaturés", on entend en particulier par élastomère diénique "fortement insaturé" un élastomère diénique ayant un taux de motifs d'origine diénique (diènes conjugués) qui est supérieur à 50%.

Bien qu'elle soit applicable à tout type d'élastomère diénique, la présente invention est préférentiellement mise en oeuvre avec un élastomère diénique du type fortement insaturé.

Cet élastomère diénique est plus préférentiellement choisi dans le groupe constitué par les polybutadiènes (BR), le caoutchouc naturel (NR), les polyisoprènes de synthèse (IR), les différents copolymères de butadiène, les différents copolymères d'isoprène, et les mélanges de ces élastomères, de tels copolymères étant notamment choisis dans le groupe constitué par les copolymères de butadiène-styrène (SBR), les copolymères d'isoprène-butadiène (BIR), les copolymères d'isoprène- styrène (SIR) et les copolymères d'isoprène-butadiène-styrène (SBIR).

Un mode de réalisation particulièrement préférentiel consiste à utiliser un élastomère "isoprénique", c'est-à-dire un homopolymère ou un copolymère d'isoprène, en d'autres termes un élastomère diénique choisi dans le groupe constitué par le caoutchouc naturel (NR), les polyisoprènes de synthèse (IR), les différents copolymères d'isoprène et les mélanges de ces élastomères. L'élastomère isoprénique est de préférence du caoutchouc naturel ou un polyisoprène de synthèse du type cis-1,4. Parmi ces polyisoprènes de synthèse, sont utilisés de préférence des polyisoprènes ayant un taux (% molaire) de liaisons cis-1,4 supérieur à 90%, plus préférentiellement encore supérieur à 98%.

Selon un mode de réalisation préférentiel, chaque couche de composition de caoutchouc comporte 50 à 100 pce de caoutchouc naturel. Selon d'autres modes de réalisation préférentiels, l'élastomère diénique peut être constitué, en tout ou partie, d'un autre élastomère diénique tel que, par exemple, un élastomère SBR utilisé en coupage ou non avec un autre élastomère, par exemple du type BR.

La matrice d'élastomère peut contenir un seul ou plusieurs élastomère(s) diénique(s), ce(s) dernier(s) pouvant être utilisé(s) en association avec tout type d'élastomère synthétique autre que diénique, voire avec des polymères autres que des élastomères. La composition de caoutchouc peut comporter également tout ou partie des additifs habituellement utilisés dans les matrices de caoutchouc destinées a la fabrication de pneumatiques, tels que par exemple des charges renforçantes comme le noir de carbone ou la silice, des agents de couplage, des agents anti-vieillissement, des antioxydants, des agents plastifiants ou des huiles d'extension, que ces derniers soient de nature aromatique ou non-aromatique (notamment des huiles très faiblement ou non aromatiques, par exemple du type naphténiques ou paraffiniques, à haute ou de préférence à basse viscosité, des huiles MES ou TDAE), des résines plastifiantes à haute Tg supérieure à 300°C, des agents facilitant la mise en oeuvre (processabilite) des compositions à l'état cru, des résines tackifiantes, des agents anti-réversion, des accepteurs et donneurs de méthylène tels que par exemple HMT (hexamethylènetétramine) ou H3M (hexaméthoxyméthylmélamine), des résines renforçantes (tels que résorcinol ou bismaleimide), des systèmes promoteurs d'adhésion connus du type sels métalliques par exemple, notamment sels de cobalt, de nickel ou de lanthanide, un système de réticulation ou de vulcanisation.

De préférence, le système de réticulation de la matrice d'élastomère est un système dit de vulcanisation, c'est-à-dire a base de soufre (ou d'un agent donneur de soufre) et d'un accélérateur primaire de vulcanisation. A ce système de vulcanisation de base peuvent s'ajouter divers accélérateurs secondaires ou activateurs de vulcanisation connus. Le soufre est utilisé à un taux préférentiel compris entre 0,5 et 10 pce, l'accélérateur primaire de vulcanisation, par exemple un sulfénamide, est utilisé à un taux préférentiel compris entre 0,5 et 10 pce. Le taux de charge renforçante, par exemple du noir de carbone ou de la silice, est de préférence supérieur à 50 pce, notamment compris entre 50 et 150 pce.

Comme noirs de carbone conviennent tous les noirs de carbone, notamment les noirs du type HAF, ISAF, SAF conventionnellement utilisés dans les pneumatiques (noirs dits de grade pneumatique). Parmi ces derniers, on citera plus particulièrement les noirs de carbone de grade (ASTM) 300, 600 ou 700 (par exemple N326, N330, N347, N375, N683, N772). Comme silices conviennent notamment les silices précipitées ou pyrogenées présentant une surface BET inférieure a 450 m2/g, de préférence de 30 à 400 m2/g.

L'homme de l'art saura, à la lumière de la présente description, ajuster la formulation de la composition de caoutchouc afin d'atteindre les niveaux de propriétés (notamment module d'élasticité) souhaités, et adapter la formulation à l'application spécifique envisagée.

De préférence, la matrice d'élastomère présente, à l'état réticulé, un module sécant en extension, à 10% d'allongement, qui est compris entre 4 et 80 MPa, plus préférentiellement entre 4 et 70 MPa ; des valeurs comprises notamment entre 25 et 60 MPa se sont révélées convenir particulièrement pour le renforcement des armatures de sommet de pneumatiques. Les mesures de module sont effectuées en traction, sauf indication différente, selon la norme ASTM D 412 de 1998 (éprouvette "C") : on mesure en seconde élongation (c'est-à-dire après un cycle d'accommodation) le module sécant "vrai" (c'est-à-dire ramené à la section réelle de l'éprouvette) à 10% d'allongement, noté ici Ms et exprime en MPa (conditions normales de température et d'hygrométrie selon la norme ASTM D 1349 de 1999).

Avantageusement, l'élément de renfort est revêtu d'une couche d'une colle d'adhésion entre l'élément de renfort et la matrice d'élastomère.

La colle utilisée est par exemple du type RFL (Résorcinol-Formaldéhyde-Latex) ou par exemple, telle que décrite dans les publications WO2013017421, WO2013017422, WO2013017423.

L'invention permet d'obtenir un pneumatique comprenant un élément de renfort tel que défini ci-dessus ou un élément composite tel que défini ci-dessus.

Dans un mode de réalisation, le pneumatique comprend un sommet surmonté d'une bande de roulement, deux flancs, deux bourrelets, chaque flanc reliant chaque bourrelet au sommet, une armature de carcasse ancrée dans chacun des bourrelets et s'étendant dans les flancs jusque dans le sommet, l'armature de carcasse comprenant l'élément de renfort ou l'élément composite.

De préférence, dans ce mode de réalisation, la direction principale fait un angle allant de 80 à 90°, de préférence allant de 85° à 90° avec la direction circonférentielle du pneumatique.

Dans un autre mode de réalisation, le pneumatique comprend un sommet surmonté d'une bande de roulement, deux flancs, deux bourrelets, chaque flanc reliant chaque bourrelet au sommet, une armature de carcasse ancrée dans chacun des bourrelets et s'étendant dans les flancs jusque dans le sommet, une armature de sommet radialement intercalée entre l'armature de carcasse et la bande de roulement, l'armature de sommet comprend l'élément de renfort ou l'élément composite.

De préférence, dans ce mode de réalisation, la direction principale fait un angle allant de 0° à 80°, de préférence allant de 5° à 50° avec la direction circonférentielle du pneumatique.

Dans un mode de réalisation, le pneumatique est destiné à un véhicule tourisme comprenant notamment les véhicules 4x4 et "SUV" (*Sport Utility Vehicles*).

Dans un autre mode de réalisation le pneumatique est destiné à un véhicule industriel comprenant les camionnettes, les véhicules lourds tels que "Poids lourd" - i.e., métro, bus, engins de transport routier (camions, tracteurs, remorques), véhicules hors-la-route -, les engins agricoles ou de génie civil, les aéronefs et autres véhicules de transport ou de manutention.

L'invention sera mieux comprise à la lecture de la description qui va suivre, donnée uniquement à titre d'exemple non limitatif et faite en se référant aux dessins dans lesquels:
- la figure 1 est une vue en coupe d'un pneumatique selon l'invention ;
- la figure 2 est une vue en coupe d'un élément composite selon l'invention formant une nappe de travail du pneumatique de la figure 1;
- la figure 3 est une vue en coupe d'un élément de renfort selon un premier mode de réalisation de l'invention de l'élément composite de la figure 2 ;
- la figure 4 est un agrandissement d'un bord latéral de l'élément de renfort de la figure 3 ;
- la figure 5 est une vue analogue à celle de la figure 3 d'un élément de renfort selon un deuxième mode de réalisation de l'invention ;
- la figure 6 est une vue analogue à celle de la figure 4 de l'élément de renfort de la figure 5 ;
- la figure 7 est un schéma d'une installation de traitement d'un élément de renfort ;
- la figure 8 est un schéma de dispositifs de générations de flux de plasma de l'installation de la figure 7;
- la figure 9 est un schéma détaillé d'un dispositif de génération d'un flux de plasma de l'installation de la figure 7 ;
- la figure 10 est un diagramme illustrant des étapes du procédé de traitement de l'élément de renfort selon l'invention ;
- la figure 11 est un graphique comprenant plusieurs courbes force-allongement de plusieurs éléments composites dont deux selon l'invention ;
- la figure 12 est une vue en coupe d'un élément de renfort selon l'invention obtenu par un procédé de traitement plasma, et
- la figure 13 est une vue analogue à celle de la figure 12 d'un élément de renfort de l'état de la technique.

Dans la description suivante, dans l'emploi du terme « radial », il convient de distinguer plusieurs utilisations différentes du mot par la personne du métier. Premièrement, l'expression se réfère à un rayon du pneumatique. C'est dans ce sens qu'on dit d'un point P1 qu'il est « radialement intérieur » à un point P2 (ou « radialement à l'intérieur » du point P2) s'il est plus près de l'axe de rotation du pneumatique que le point P2. Inversement, un point P3 est dit « radialement extérieur à » un point P4 (ou « radialement à l'extérieur » du point P4) s'il est plus éloigné de l'axe de rotation du pneumatique que le point P4. On dira qu'on avance « radialement vers l'intérieur (ou l'extérieur) » lorsqu'on avance en direction des rayons plus petits (ou plus grands). Lorsqu'il est question de distances radiales, ce sens du terme s'applique également.

En revanche, un élément de renfort ou une armature est dit « radial » lorsque l'élément de renfort ou les éléments de renfort de l'armature font avec la direction circonférentielle un angle supérieur ou égal à 65° et inférieur ou égal à 90°, de préférence allant de 80° à 90° et plus préférentiellement allant de 85° à 90°.

Une direction « axiale » est une direction parallèle à l'axe de rotation du pneumatique. Un point P5 est dit « axialement intérieur » à un point P6 (ou «axialement à l'intérieur » du point P6) s'il est plus près du plan médian M du pneumatique que le point P6. Inversement, un point P7 est dit « axialement extérieur à » un point P8 (ou « axialement à l'extérieur » du point P8) s'il est plus éloigné du plan médian M du pneumatique que le point P8.

Le « plan médian » M du pneumatique est le plan qui est normal à l'axe de rotation du pneumatique et qui se situe à équidistance des structures annulaires de renfort de chaque bourrelet.

D'autre part, tout intervalle de valeurs désigné par l'expression « de a à b » signifie le domaine de valeurs allant de la borne « a » jusqu'à la borne « b » c'est-à-dire incluant les bornes strictes « a » et « b ». Tout intervalle de valeurs désigné par l'expression « entre a et b » signifie le domaine de valeurs variant entre la borne « a » et la borne « b » c'est-à-dire excluant les bornes strictes « a » et « b ».

### EXEMPLES DE PNEUMATIQUE ET D'ELEMENT DE RENFORT

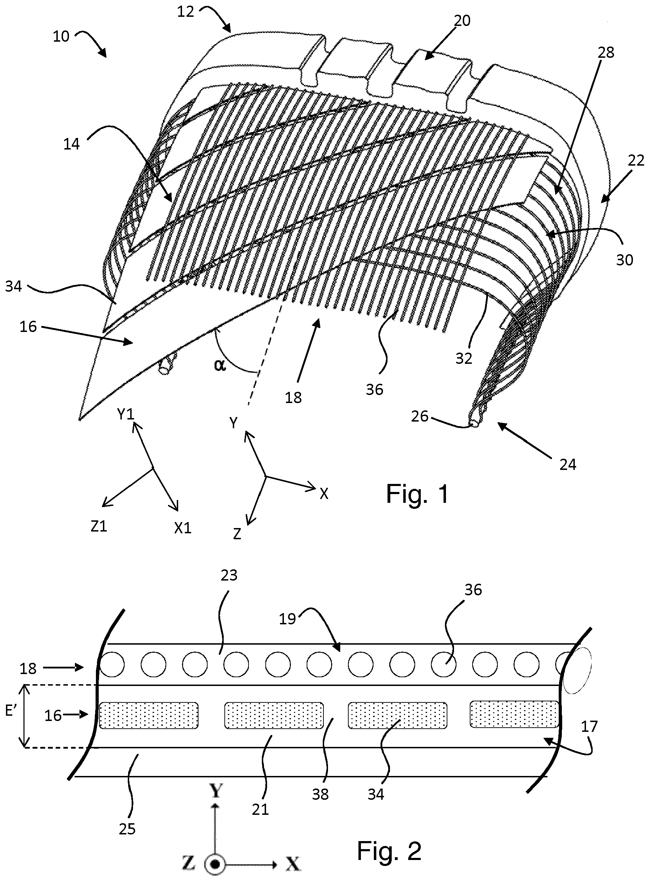

Sur les figures 1 et 2, on a représenté un repère X, Y, Z correspondant aux directions habituelles respectivement axiale (X), radiale (Y) et circonférentielle (Z) d'un pneumatique.

On a représenté sur les figures 1 et 2 un pneumatique conforme à l'invention et désigné par la référence générale 10. Le pneumatique 10 est sensiblement de révolution autour d'un axe sensiblement parallèle à la direction axiale X. Le pneumatique 10 est ici destiné à un véhicule de tourisme.

Le pneumatique 10 comporte un sommet 12 comprenant une armature de sommet 14 comprenant une armature de travail 16 comprenant une nappe de travail 17 d'éléments de renfort et une armature 18 de frettage comprenant une nappe de frettage 19. L'armature de sommet 14 est surmontée d'une bande de roulement 20. Ici, l'armature de frettage 18, ici la nappe de frettage 19, est radialement intercalée entre l'armature de travail 16 et la bande de roulement 20. Deux flancs 22 prolongent le sommet 12 radialement vers l'intérieur. Le pneumatique 10 comporte en outre deux bourrelets 24 radialement intérieurs aux flancs 22 et comportant chacun une structure annulaire de renfort 26, en l'occurrence une tringle, ainsi qu'une armature de carcasse radiale 28. L'armature de sommet 14 est radialement intercalée entre l'armature de carcasse 28 et la bande de roulement 20. Chaque flanc 22 relie chaque bourrelet 24 au sommet 14.

L'armature de carcasse 28 comporte de préférence une seule nappe de carcasse 30 d'éléments de renfort textiles radiaux 32. L'armature de carcasse 28 est ancrée à chacun des bourrelets 24 par un retournement autour de la tringle 26 de manière à former dans chaque bourrelet 24 un brin aller s'étendant depuis les bourrelets 24 à travers les flancs 22 jusque dans le sommet 12, et un brin retour, l'extrémité radialement extérieure du brin retour étant radialement à l'extérieur de la tringle 26. L'armature de carcasse 30 s'étend ainsi depuis les bourrelets 24 à travers les flancs 22 jusque dans le sommet 12. Dans ce mode de réalisation, l'armature de carcasse 28 s'étend également axialement au travers du sommet 12.

La nappe de travail 16 forme un élément composite selon l'invention comprenant des éléments de renfort 34 selon l'invention s'étendant selon une direction principale Z1 formant un angle α allant de 0° à 80°, de préférence allant de 5° à 50°, plus préférentiellement allant de 15° à 40° et encore plus préférentiellement allant de 20° à 30° et ici égal à 26° avec la direction circonférentielle Z du pneumatique 10. En variante, l'armature de travail 16 comprend plusieurs nappes de travail, par exemple deux nappes de travail, comprenant chacune des éléments de renforts 34 conformes à l'invention.

La nappe de frettage 19 comprend des éléments de renfort 36 de frettage formant un angle au plus égal à 10°, de préférence allant de 5° à 10° avec la direction circonférentielle Z du pneumatique 10. En l'espèce, les éléments de renfort 36 de frettage sont des retors réalisés en aramide chaque retors consistant en deux filés de 167 tex qui ont été retordus ensemble (sur câbleuse directe) à 230 tours/mètre. En variante, on pourra utiliser d'autres matériaux textiles, comme le PET, mais également des éléments de renfort métalliques.

Chaque nappe de travail 16, de frettage 19 et de carcasse 30 comprend respectivement une matrice d'élastomère 21, 23 et 25 dans laquelle sont noyés les éléments de renfort de la nappe correspondante. Les compositions de caoutchouc des matrices d'élastomère des nappes de travail 16, de frettage 19 et de carcasse 30 sont des compositions conventionnelles pour calandrage d'éléments de renfort comprenant de façon classique un élastomère diénique, par exemple du caoutchouc naturel, une charge renforçante, par exemple du noir de carbone et/ou de la silice, un système de réticulation, par exemple un système de vulcanisation, de préférence comprenant du soufre, de l'acide stéarique et de l'oxyde de zinc, et éventuellement un accélérateur et/ou un retardateur de vulcanisation et/ou divers additifs.

Les éléments de renfort 34 de l'élément composite 16 sont agencés côte à côte. Les éléments de renfort 34 s'étendent parallèlement les uns aux autres. L'élément composite 16 comprend des ponts 38 de la matrice d'élastomère séparant deux éléments de renfort 34 successifs.

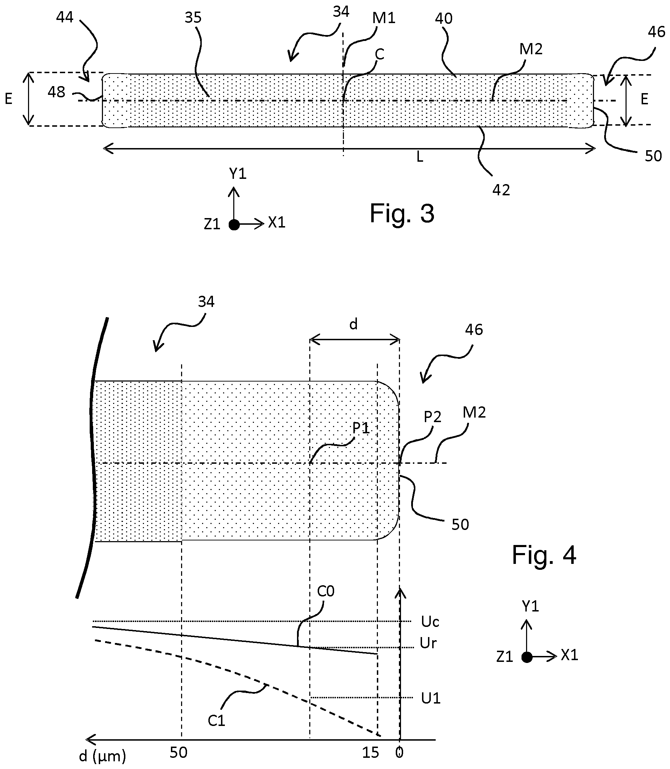

On a représenté sur les figures 3 et 4 l'élément de renfort 34 de l'élément composite 16 et formant un élément de renfort selon un premier mode de réalisation de l'invention.

Sur la figure 3, on a représenté un repère X1, Y1, Z1 correspondant aux directions générales selon lesquelles s'étendent respectivement la largeur (X1), l'épaisseur (Y1) et la longueur (Z1) d'un objet tridimensionnel.

L'élément de renfort 34 présente une longueur G s'étendant selon une direction générale principale Z1. Dans le pneumatique 10, la direction principale Z1 fait un angle α avec la direction circonférentielle Z du pneumatique 10. L'élément de renfort 34 présente une largeur L s'étendant selon une direction générale X1. L'élément de renfort 34 présente une épaisseur E s'étendant selon une direction générale Y1.

L'élément de renfort 34 présente, dans le plan perpendiculaire à la direction principale Z1, une section de forme générale aplatie. La section peut présenter une forme oblongue, elliptique, ovale, rectangulaire, parallélogramme ou encore losange. L'élément de renfort 34 présente une section de forme générale rectangulaire

L'élément de renfort 34 présente un rapport de forme supérieur ou égal à 5, de préférence supérieur ou égal à 10, plus préférentiellement à 20 et encore plus préférentiellement à 30.

L'élément de renfort 34 est ici constitué d'un film 35 en composition polymérique comprenant au moins un polymère thermoplastique. Le polymère thermoplastique est semi-cristallin et est choisi parmi un polyester, un polyamide, une polycétone ou un mélange de ces matériaux et de préférence est un polyester.

En l'espèce, l'élément de renfort 34 est constitué d'un film 35 en polyéthylène téréphtalate (PET) étiré multiaxialement, ici bi-étiré (« Mylar A » de la société DuPont Teijin Films). D'autres polymères thermoplastiques pourraient être utilisés, par exemple d'autres polyesters ou du nylon.

L'élément de renfort 34 présente une épaisseur E allant de 0,05 à 1 mm, de préférence de 0,1 à 0,7 mm et est ici égale à 0,5 mm. L'élément de renfort 34 présente une largeur L supérieure ou égale à 2,5 mm, de préférence à 5 mm et plus préférentiellement à 10 mm et ici égale à 25 mm.

Ici, le rapport de forme est égal à 50.

L'élément de renfort 34 comprend deux faces longitudinales 40, 42 et deux bords latéraux 44, 46 comprenant chacun une surface latérale externe 48, 50. Chaque bord latéral 44, 46 s'étend selon une direction générale sensiblement parallèle à la direction principale Z1. Chaque bord latéral 44, 46 est dépourvu d'arête. Ainsi, chaque surface latérale externe 48, 50 délimitant chaque bord latéral 44, 46 est une surface continue. En d'autres termes, chaque surface latérale externe 48, 50 ne présente aucun décrochement ni aucune saillie formant une discontinuité sur la surface latérale externe 48, 50.

Chaque bord latéral 44, 46 est en la composition polymérique comprenant le polymère thermoplastique, ici le PET.

On a représenté sur la figure 3 un premier plan médian M1 de la largeur L de l'élément de renfort 34 ainsi qu'un deuxième plan médian M2 de l'épaisseur de l'élément de renfort 34. Les premier et deuxième plans médians M1, M2 s'étendent sensiblement parallèlement à la direction principale Z1 et sont sensiblement perpendiculaires l'un à l'autre. On a représenté le point central C défini comme le point d'intersection entre les premier et deuxième plans médians M1, M2 dans le plan de coupe de la figure 3.

On a représenté sur la figure 4 le bord latéral 46 de l'élément de renfort 34. Le bord latéral 46 présente un point P1, dit de mesure, appartenant au deuxième plan médian M2. Le point de mesure P1 est distant d'un point P2, dit d'extrémité, appartenant au deuxième plan médian M2 et à la surface externe 50 délimitant le bord latéral 46 d'une distance d comprise dans un intervalle ]0 µm ; 50 µm], de préférence [15 µm, 50 µm]. Ici d=15 µm.

De façon optionnelle, l'élément de renfort comprend une partie centrale délimitée au moins en partie par le bord latéral, la partie centrale étant réalisée au moins en partie dans la composition polymérique. La partie centrale comprend le point central, dans le cas où le point central est en la composition polymérique, et le point le plus proche du point central en la composition polymérique dans le cas où le point central n'est pas en la composition polymérique. Ici, le point central C est en la composition polymérique, c'est-à-dire ici en PET. Le point P1 est également en la composition polymérique.

Les mesures de microdureté au point central et au point de mesure sont toutes réalisées dans la même matière, ici la composition polymérique. En particulier, la mesure de la microdureté au point central est réalisée au point central dans le cas où celui-ci est réalisé dans la composition polymérique. Dans le cas où le point central est réalisé dans une matière différente de la composition polymérique, la valeur Uc est celle du point le plus proche. Par point le plus proche, on entend le point le plus proche en distance à partir du point central. Ainsi, la variation de microdureté n'est pas associée à un changement de matériau, par exemple comme ce serait le cas dans un matériau composite comprenant deux matériaux de nature différente (ex : composite métal/thermoplastique), mais à des variations de propriétés au sein d'une même matière, qui de par sa microstructure variable, lui confèrent des propriétés mécaniques locales différentes.

On a également représenté sur la figure 4 la variation de la microdureté U de la composition polymérique en fonction de la distance d à la surface latérale externe 50 selon une direction sensiblement parallèle à la direction X1. La courbe C0 (courbe continue) représente la variation de la microdureté U d'un élément de renfort de l'état de la technique et non conforme à l'invention. La courbe C1 (courbe en traits discontinus) représente la variation de la microdureté U de l'élément de renfort 34.

Uc représente la valeur moyenne de la microdureté de l'élément de renfort 34 mesurée au point central C. U1 représente la valeur moyenne de la microdureté de l'élément de renfort 34 mesurée au point de mesure P1. Ur représente la valeur moyenne de la microdureté d'un élément de renfort de l'état de la technique et donc non conforme à l'invention au point de mesure P1. Ce qui vient d'être décrit pour le bord latéral 46 s'applique *mutatis mutandis* au bord latéral 44.

Chaque élément de renfort 34 est revêtu d'une couche d'un primaire d'adhésion et d'une couche d'une colle d'adhésion revêtant la couche du primaire d'adhésion. En variante, la couche d'adhésion revêt directement la composition polymérique (absence de la couche de primaire d'adhésion).

Le primaire d'adhésion comprend généralement une résine époxy, bien connue de l'homme du métier. La colle d'adhésion comprend une colle RFL ou bien une résine phénol-aldéhyde à base d'au moins un polyphénol et un polyaldéhyde telle que celles décrites dans les publications WO2013017421, WO2013017422, WO2013017423. En variante, d'autres types de colles peuvent être utilisées, par exemple des colles thermoplastiques.

Préférentiellement, la colle d'adhésion comprend au moins un élastomère diénique. Un tel élastomère permet d'améliorer le collant à cru et/ou à cuit de la colle avec la matrice en caoutchouc. Avantageusement, l'élastomère diénique est choisi parmi le caoutchouc naturel, un copolymère de styrène et de butadiène, un terpolymère de vinylpyridine, de styrène et de butadiène et un mélange de ces élastomères diéniques.

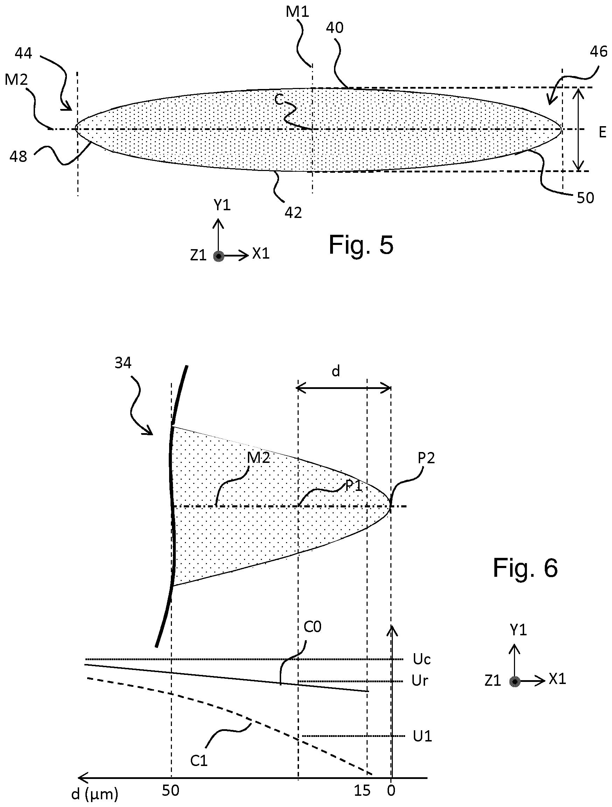

On a représenté sur les figures 5 et 6 un élément de renfort 34 selon un deuxième mode de réalisation.

A la différence de l'élément de renfort 34 selon le premier mode de réalisation, l'élément de renfort selon le deuxième mode de réalisation présente une section de forme générale elliptique avant soumission du bord latéral au flux de plasma.

### EXEMPLE DE PROCEDE SELON L'INVENTION PERMETTANT D'OBTENIR L'ELEMENT DE RENFORT

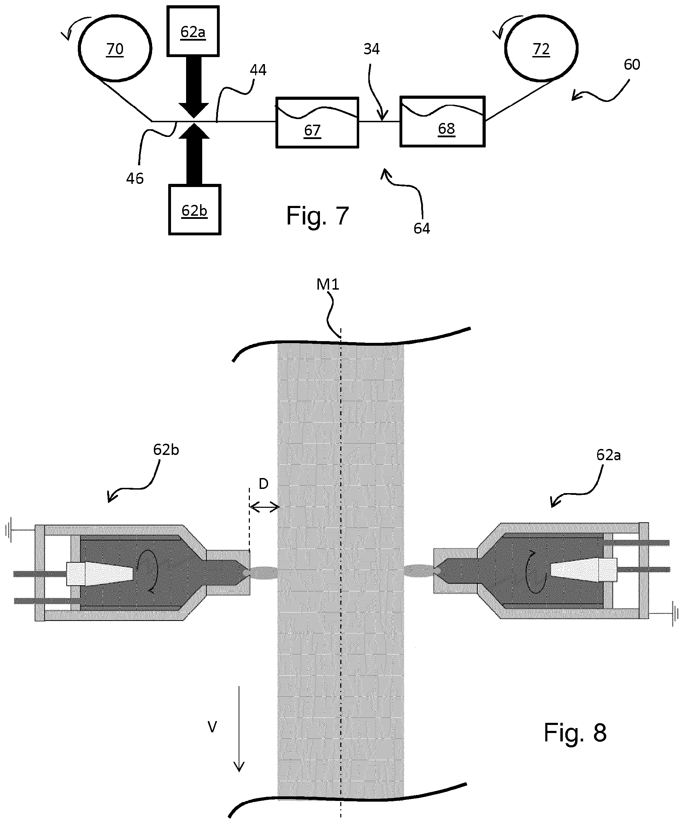

On a représenté sur les figures 7 à 9 une installation de traitement de l'élément de renfort 34 permettant de mettre en oeuvre un procédé de traitement, notamment par torche plasma. L'installation est désignée par la référence générale 60.

L'installation 60 comprend deux dispositifs 62a, 62b de génération d'un flux de plasma ainsi qu'un dispositif 64 de revêtement de l'élément de renfort 34.

Un plasma permet de générer, à partir d'un gaz soumis à une tension électrique, un flux thermique comprenant des molécules à l'état gazeux, des ions et des électrons. Avantageusement, le plasma est du type plasma froid. Un tel plasma, également appelé plasma hors équilibre est tel que la température provient majoritairement du mouvement des électrons. Un plasma froid doit être distingué d'un plasma chaud, également appelé plasma thermique dans lequel les électrons, mais aussi les ions confèrent à ce plasma certaines propriétés, notamment thermiques, différentes de celles du plasma froid.

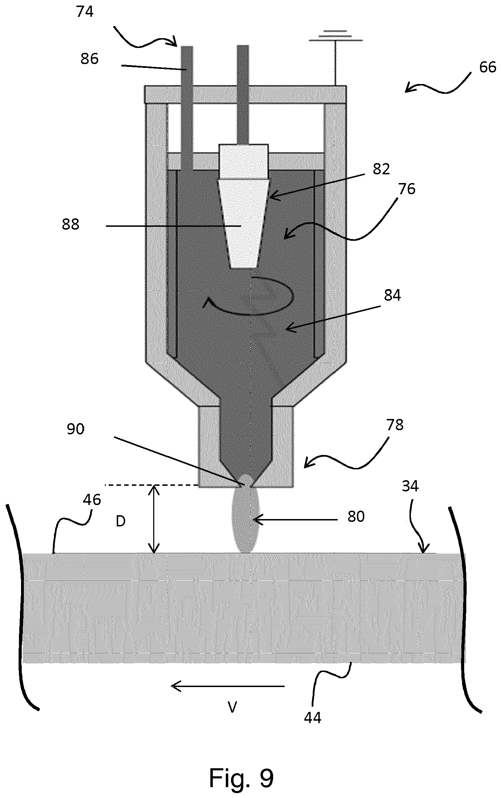

Chaque dispositif 62a, 62b comprend une torche à plasma 66 illustrée en détails sur la figure 9. Chaque dispositif 62a, 62b est destiné à traiter respectivement au moins une partie de chaque bord latéral 44, 46. Le dispositif 64 de revêtement comprend un premier bain 67 contenant le primaire d'adhésion et un deuxième bain 68 contenant la colle d'adhésion, ici une colle du type RFL.

Les dispositifs 62a, 62b sont agencés de part et d'autre de l'élément de renfort 34, ici de façon sensiblement symétrique par rapport au plan médian M1 de l'élément de renfort 34.

L'installation 60 comprend également deux rouleaux de stockage amont et aval respectivement désignés par les références 70, 72. Le rouleau amont 70 porte l'élément de renfort 34 non traité alors que le rouleau 72 porte l'élément de renfort 34 traité par plasma au moyen des dispositifs 62a, 62b et revêtu du primaire et de la colle d'adhésion au moyen du dispositif 64 de revêtement. Les dispositifs 62a, 62b et 64 sont agencés dans cet ordre entre les rouleaux 70, 72 dans le sens de défilement de l'élément de renfort 34. Les dispositifs 62a, 62b sont situés en amont par rapport au dispositif 64 dans le sens de défilement de l'élément de renfort 34.

On a représenté sur la figure 8 les dispositifs 62a, 62b de génération d'un flux de plasma, ici des torches à plasma 66 commercialisées par la société Plasmatreat GmbH. Chaque torche à plasma 66 est alimentée par un courant alternatif de tension inférieure à 360 V et de fréquence comprise entre 15 et 25 kHz.

En référence à la figure 9, la torche à plasma 66 comprend des moyens 74 d'alimentation en gaz d'une chambre 76 de génération du flux plasma ainsi que des moyens 78 de sortie du plasma généré dans la chambre 76 sous la forme d'un flux 80 de plasma, ici un jet de plasma. La torche à plasma 66 comprend également des moyens 82 de génération d'un arc électrique rotatif 84 dans la chambre 76.

Les moyens d'alimentation 74 comprennent un conduit 86 d'entrée du gaz dans la chambre 76. Les moyens de génération 82 de l'arc électrique comprennent une électrode 88. Les moyens de sortie 78 comprennent un orifice 90 de sortie du flux du flux de plasma 80.

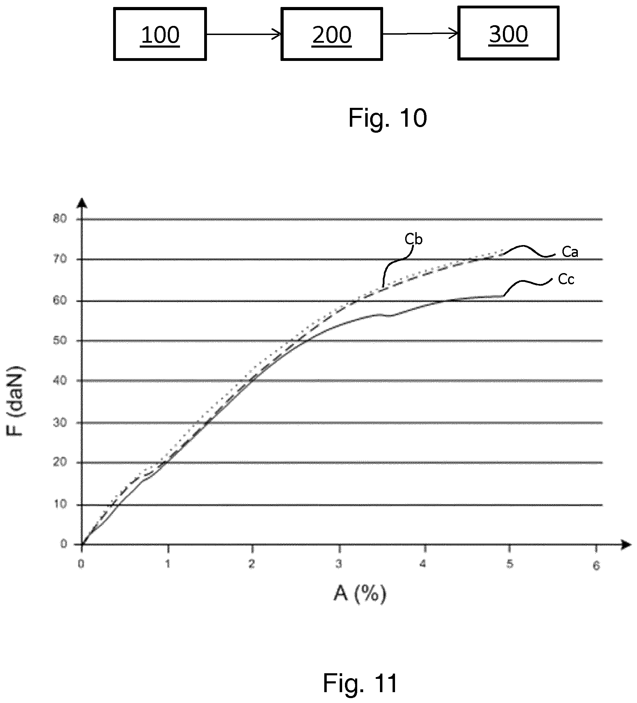

On a représenté sur la figure 10 un diagramme illustrant les principales étapes 100 à 300 du procédé de traitement permettant de fabriquer l'élément de renfort 34.

Lors d'une étape 100 de chauffage, on soumet au moins une partie de chaque bord latéral 44, 46 au flux 80 généré au moyen de deux torches à plasma 66. Lors de cette étape 100, on traite l'élément de renfort 34 en continu. Le procédé de traitement se fait à pression atmosphérique. L'utilisation d'un plasma à pression atmosphérique permet la mise en place d'une installation industrielle relativement simple et peu coûteuse contrairement à un procédé nécessitant l'utilisation d'un plasma sous pression réduite associé à la mise en place d'une chambre dépressurisée.

Ainsi, lors de cette étape 100, on soumet la partie de chaque bord latéral 44, 46 à un flux de plasma depuis une source de flux de plasma de façon à élever la température de chaque partie de chaque bord latéral 44, 46 au-delà de la température de fusion Tf du polymère thermoplastique. Ainsi, on amorphise la structure du polymère thermoplastique.

Le flux 80 est obtenu à partir d'un gaz comprenant au moins un composant oxydant. Par composant oxydant, on entend tout composant susceptible d'augmenter le degré d'oxydation des fonctions chimiques présentes dans la composition polymérique et en particulier dans le polymère thermoplastique.

Avantageusement, le composant oxydant est choisi parmi le dioxyde de carbone (CO₂), le monoxyde de carbone (CO), le sulfure d'hydrogène (H₂S), le sulfure de carbone (CS₂), le dioxygène (O₂), l'azote (N₂), le chlore (Cl₂), l'ammoniac (NH₃) et un mélange de ces composants. De préférence, le composant oxydant est choisi parmi le dioxygène (O₂), l'azote (N₂) et un mélange de ces composants. Plus préférentiellement, le composant oxydant est l'air. Ici, le flux 80 est obtenu à partir d'un mélange d'air et d'azote à un débit de 2400 L/h.

L'orifice 90 est disposé en regard de chaque bord latéral 44, 46 à traiter, ici en regard de chaque surface externe 48, 50. L'orifice 90 est situé à une distance constante D de chaque bord latéral 44, 46. Par exemple, cette distance est comprise entre 1 mm et 20 mm et de préférence entre 2 mm et 10 mm.

On fait défiler l'élément de renfort 34 par rapport à au moins une source de flux de plasma, ici par rapport à deux sources de flux de plasma à une vitesse moyenne V comprise entre 1 et 100 m.min⁻¹ et de préférence entre 1 et 50 m.min⁻¹. La vitesse moyenne V est égale au rapport de la distance parcourue par le flux de plasma 80 par rapport au bord à exposer sur une durée prédéterminée mise pour parcourir cette distance, en l'espèce 30s. Le déplacement du flux par rapport à l'élément de renfort 34 peut être rectiligne ou courbe ou un mélange des deux. En l'espèce, l'élément de renfort 34 a un mouvement rectiligne continu uniforme par rapport aux sources de flux de plasma.

Puis, lors d'une étape 200, on revêt l'élément de renfort 34, du primaire d'adhésion du premier bain 67.

Ensuite, dans une étape 300, postérieure aux étapes 100 et 200, on revêt l'élément de renfort 34 de la colle d'adhésion du deuxième bain 68.

D'autres étapes ultérieures non représentées peuvent également être mises en oeuvre. A titre d'exemple, on pourra réaliser une étape d'essorage (par exemple par soufflage, calibrage) pour éliminer l'excès de colle ; puis une étape de séchage par exemple par passage dans un four (par exemple pendant 30 s à 180°C) et enfin une étape de traitement thermique (par exemple pendant 30 s à 230°C).

L'homme du métier comprendra aisément que l'adhésion définitive entre l'élément de renfort 34 et la matrice d'élastomère dans laquelle il est noyé est assurée définitivement lors de la cuisson finale du pneumatique.

### TESTS COMPARATIFS

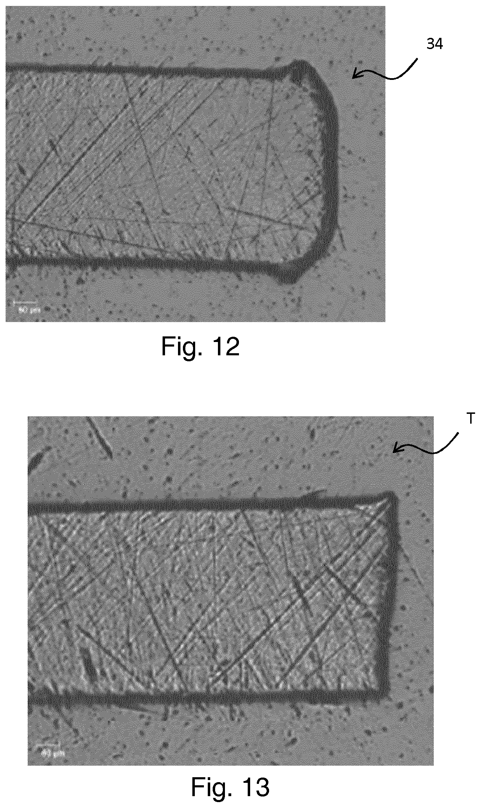

Dans un premier test, on a comparé deux éléments de renfort 34, 34' et un élément de renfort T de l'état de la technique. Les éléments de renfort 34, 34' sont conformes à l'invention et obtenus par le procédé de traitement décrit ci-dessus respectivement avec des vitesses de défilement et des distance par rapport à l'orifice de sortie du flux de plasma V=10 m.min⁻¹ et D=3,5 mm (élément 34 représenté sur la figure 12) et V=10 m.min⁻¹ et D=1 mm (élément 34'). L'élément de renfort T n'a pas été traité par le procédé décrit ci-dessus et est représenté sur la figure 13.

Sur la figure 12, on observe une déformation des arêtes du bord longitudinal de l'élément de renfort conformément à l'invention par rapport à l'élément de renfort de l'état de la technique. Cette déformation permet d'obtenir un élément de renfort dépourvu d'arêtes, par nature saillantes, qui pourraient faciliter la création d'amorces de rupture de l'interface entre la matrice d'élastomère et l'élément de renfort.

On a tout d'abord mesuré la microdureté de chaque élément de renfort comme décrit ci-dessous.

Chaque valeur moyenne de microdureté est égale à la moyenne arithmétique de 10 mesures chacune réalisée sur une coupe sensiblement perpendiculaire à la direction principale au point central (mesure de Uc) et au point de mesure (mesure de Ur et U1) de chaque coupe. Les dix coupes sont réalisées sur une longueur de 10 cm de l'élément de renfort, par exemple à chaque centimètre.

On mesure la microdureté de la composition polymérique par mesure de microdureté par nanoindentation. En l'espèce, on utilise un nanoindenteur (modèle « Ultra NanonIndentation Tester UNHT » de la société CSM Instruments). On sollicite statiquement en compression la composition polymérique dans une plage de déformation faible, ici inférieure à 10%. Chaque mesure repose sur la mesure de la profondeur de pénétration d'un indenteur pyramidal (indenteur de type Berkovich) à une charge donnée et à un point donné. Chaque mesure se fait sous forme d'un cycle sensiblement linéaire charge/décharge. Le modèle mécanique utilisé pour le traitement des cycles de charge/décharge est le modèle Oliver et Pharr, modèle couramment utilisé pour les matériaux élastomériques linéaires. Ce modèle répond à la norme ISO14577-4 :2007 ici reproduite. La préparation de chaque éprouvette de test comprend l'enrobage de chaque élément de renfort dans une résine époxy. Puis, on coupe l'élément de renfort ainsi enrobé selon un plan de coupe sensiblement perpendiculaire à la direction principale Z1 et on polit l'éprouvette en utilisant des papiers de différents grains (600, 1200) puis des feutres utilisant différentes solutions diamentées (9 µm, 3 µm, 1 µm et 0,25 µm). La mesure de microdureté est alors réalisée en déplaçant l'indenteur perpendiculairement au plan de coupe, ici selon la direction principale Z1.

On a également comparé les valeurs des rapports R=(Uc-U1)/Uc et R=(Uc-Ur)/Uc indiquant la variation relative de la microdureté de la composition polymérique entre le centre de l'élément de renfort et son bord latéral.

On a rassemblé les résultats de ces mesures dans le tableau 1 ci-dessous.

**Tableau 1**

| **Elément de renfort** | **Traitement Plasma** | **Uc (GPa)** | **Ur (GPa)** | **U1 (GPa)** | **R** |
|---|---|---|---|---|---|
| Film PET T | Non | 4,23 | 3,82 | / | 10 % |
| Film PET 34 | Oui | 4,13 | / | 2,81 | 32 % |
| Film PET 34' | Oui | 4,19 | / | 2,89 | 31 % |

L'élément de renfort T est tel que R ≤ 11 % et ici R=10%. En effet, par effet de bord, plus on se rapproche de la surface externe, plus la microdureté de l'élément de renfort T diminue. Toutefois, la baisse relative de la microdureté R=(Uc-Ur)/Uc étant limitée à 10%, elle ne permet pas de limiter suffisamment la variation de microdureté entre la matrice d'élastomère et l'élément de renfort contrairement à l'invention. En effet, les éléments de renfort 34, 34' sont tels que R > 11 %. On a même R ≥ 15%, de préférence R ≥ 20% et plus préférentiellement R ≥ 25%. On a également R ≤ 40 % pour ces éléments de renfort 34, 34'.

Dans un deuxième test, on a réalisé une courbe force-allongement bien connue de l'homme du métier d'éléments composites 16, 16' obtenus grâce au procédé selon l'invention et K selon l'état de la technique. Chaque élément composite 16, 16' comprend respectivement des éléments de renfort 34, 34' tels que décrits ci-dessus. Les courbes de ce test sont représentées sur la figure 11 et représentent la variation de la force F en fonction de l'allongement A. On a représenté la courbe force-allongement de l'élément composite 16 en traits discontinus (courbe Ca). On a représenté la courbe force-allongement de l'élément composite 16' en pointillés (courbe Cb). On a représenté la courbe force-allongement de l'élément composite K en trait continu (courbe Cc). Les valeurs de la force à rupture des éléments composites testés sont résumées dans le tableau 2 ci-dessous.

**Tableau 2**

| **Elément composite** | **Elément de renfort** | **Traitement Plasma** | **R** | **Fm (%)** |
|---|---|---|---|---|
| K | Film PET T | Non | 10% | 100 |
| 16 | Film PET 34 | Oui | 32 % | 117 |
| 16' | Film PET 34' | Oui | 31 % | 118 |

Dans un troisième test, on a comparé des pneumatiques 10, 10' conformes à l'invention comprenant respectivement les éléments composites 16, 16' conformes à l'invention et des pneumatiques P1, P2 de l'état de la technique. La dimension des pneumatiques testés est 175/65 R14.

Le pneumatique P1 comprend une architecture classique comprenant une armature de travail classique comprenant deux nappes de sommet comprenant des éléments de renforts filaires constitués de câbles métalliques de structure 2.30 agencés au pas de 1,2 mm et une armature de frettage comprenant une nappe de frettage comprenant des éléments de renforts filaires constitués de retors en polyamide 66 (140 tex/2, 250 t.m⁻¹/250 t.m⁻¹).

Le pneumatique P2 présente une architecture identique aux pneumatiques 10, 10' mais ne comprend pas d'élément composite dont les éléments de renfort ont été traités par le procédé de traitement décrit ci-dessus et ne présente donc pas d'élément de renfort tels que R >11%.

Lors de ce troisième test, on a soumis les pneumatiques 10, 10', P1 et P2 à un test de poussée de dérive Dz décrit ci-dessous. Les résultats sont donnés en base 100 par rapport au pneumatique P1. Ainsi, plus la valeur est supérieure à 100, meilleure est la poussée de dérive Dz du pneumatique par rapport au pneumatique P1 de l'état de la technique.

Pour mesurer la poussée de dérive Dz, on a fait rouler chaque pneumatique à une vitesse constante de 80 km/h sur une machine automatique appropriée (machine type "sol-plan" commercialisée par la société MTS), en faisant varier la charge notée "Z", sous un angle de dérive relativement élevé de 8 degrés, et on a mesuré de manière continue la poussée de dérive et identifié la rigidité de dérive notée « D » (corrigée de la poussée à dérive nulle), en enregistrant à l'aide de capteurs l'effort transversal sur la roue en fonction de cette charge Z ; on obtient ainsi la rigidité de dérive. On obtient alors, pour une charge choisie, ici 450 daN, la valeur reportée dans le tableau 3 ci-dessous.

**Tableau 3**

| **Pneumatique** | **Nappe(s) de travail** | **Traitement Plasma** | **R** | **Dz** |
|---|---|---|---|---|
| P1 | Classique | Non | / | 100 |
| P2 | K | Non | 10 % | 94 |
| 10 | 16 | Oui | 32 % | 100 |
| 10' | 16' | Oui | 31 % | 102 |

Ainsi, les pneumatiques 10 et 10' présentent tous les avantages du pneumatique P1 sans que la rigidité de dérive aux angles élevés ne soit altérée comme c'est le cas pour le pneumatique P2.

L'invention ne se limite pas aux modes de réalisation décrits ci-dessus.

En effet, on pourra également envisager un pneumatique conforme à l'invention dans lequel l'armature de sommet comprend également une armature de protection radialement intercalée entre l'armature de frettage et l'armature de travail.

On pourra aussi envisager un pneumatique conforme à l'invention dans lequel l'armature de sommet ne comprend pas d'armature de frettage mais une armature de protection et une armature de travail, l'armature de protection étant radialement intercalée entre la bande de roulement et l'armature de travail.

On pourra également envisager d'autres éléments de renfort qu'un film.

On pourra également prévoir d'utiliser l'élément de renfort obtenu grâce au procédé selon l'invention dans l'armature de carcasse.

On pourra envisager un élément de renfort dans lequel le point central n'est pas en la composition polymérique. Dans ce cas, la mesure Uc est réalisée au point radialement le plus proche du point central réalisé dans la composition polymérique.

On pourra également combiner les caractéristiques des différents modes de réalisation décrits ou envisagés ci-dessus sous réserve que celles-ci soient compatibles entre elles.

## Revendications

1. Procédé de traitement d'un élément de renfort (34, 34') présentant une section de forme générale aplatie et s'étendant selon une direction principale (Z1) et comprenant au moins un bord latéral (44, 46) en une composition polymérique comprenant un polymère thermoplastique, le bord latéral s'étendant selon une direction générale sensiblement parallèle à la direction principale (Z1), **caractérisé en ce que** le procédé comprend une étape de chauffage d'au moins une partie du bord latéral au cours de laquelle on soumet au moins une partie du bord latéral à un flux de plasma de façon à élever la température de la partie du bord latéral (44, 46) au-delà de la température de fusion du polymère thermoplastique.

2. Procédé selon la revendication précédente, dans lequel le flux de plasma est généré au moyen d'une torche à plasma.

3. Procédé selon l'une quelconque des revendications précédentes, dans lequel le plasma est du type plasma froid.

4. Procédé selon l'une quelconque des revendications précédentes, dans lequel le flux de plasma est généré à partir d'un gaz comprenant au moins un composant oxydant.

5. Procédé selon la revendication précédente, dans lequel le composant oxydant est choisi parmi le dioxyde de carbone, le monoxyde de carbone, le sulfure d'hydrogène, le sulfure de carbone, le dioxygène, l'azote, le chlore, l'ammoniac et un mélange de ces composants, de préférence, choisi parmi le dioxygène, l'azote et un mélange de ces composants et plus préférentiellement est l'air.

6. Procédé selon l'une quelconque des revendications précédentes, dans lequel on fait défiler l'élément de renfort par rapport à une source de flux de plasma.

7. Procédé selon l'une quelconque des revendications précédentes, dans lequel, postérieurement à l'étape de chauffage de la partie du bord latéral, on revêt l'élément de renfort d'une colle d'adhésion.

8. Procédé selon l'une quelconque des revendications précédentes, dans lequel le polymère thermoplastique est semi-cristallin.

9. Procédé selon l'une quelconque des revendications précédentes, dans lequel le polymère thermoplastique est choisi parmi un polyester, un polyamide, une polycétone ou un mélange de ces matériaux et de préférence est un polyester.

10. Procédé selon l'une quelconque des revendications précédentes, dans lequel l'élément de renfort (34, 34') présente une épaisseur (E) allant de 0,05 à 1 mm, de préférence de 0,10 à 0,70 mm.

11. Procédé selon l'une quelconque des revendications précédentes, dans lequel l'élément de renfort (34, 34') présente une largeur (L) supérieure ou égale à 2,5 mm, de préférence à 5 mm et plus préférentiellement à 10 mm.

12. Procédé selon l'une quelconque des revendications précédentes, dans lequel la section de forme générale aplatie présente un rapport de forme supérieur ou égal à 5, de préférence supérieur ou égal à 10, plus préférentiellement à 20 et encore plus préférentiellement à 30.

13. Procédé selon l'une quelconque des revendications précédentes, dans lequel l'élément de renfort (34, 34') est constitué d'un film en la composition polymérique.

14. Procédé selon la revendication précédente, dans lequel le film (35) est étiré multiaxialement.

15. Procédé de fabrication d'un pneumatique, **caractérisé en ce qu'**on traite un élément de renfort (34 ; 34') selon un procédé selon l'une quelconque des revendications 1 à 14 et on noie l'élément de renfort (34 ; 34') dans une matrice d'élastomère.

## Patentansprüche

1. Verfahren zur Behandlung eines Verstärkungselements (34, 34'), das einen Querschnitt mit einer allgemein abgeflachten Form aufweist und sich in einer Hauptrichtung (Z1) erstreckt und mindestens einen seitlichen Rand (44, 46) aus einer Polymerzusammensetzung, umfassend ein thermoplastisches Polymer, umfasst, wobei sich der seitliche Rand in einer allgemeinen Richtung im Wesentlichen parallel zur Hauptrichtung (Z1) erstreckt,
**dadurch gekennzeichnet, dass** das Verfahren einen Schritt des Erhitzens mindestens eines Teils des seitlichen Rands umfasst, in dem mindestens ein Teil des seitlichen Rands einem Plasmastrom ausgesetzt wird, um die Temperatur des Teils des seitlichen Rands (44, 46) über die Schmelztemperatur des thermoplastischen Polymers zu erhöhen.

2. Verfahren nach dem vorhergehenden Anspruch,
wobei der Plasmastrom mit einem Plasmabrenner erzeugt wird.

3. Verfahren nach einem der vorhergehenden Ansprüche,
wobei das Plasma vom Typ eines kalten Plasmas ist.

4. Verfahren nach einem der vorhergehenden Ansprüche,
wobei der Plasmastrom aus einem Gas erzeugt wird, das mindestens eine Oxidationskomponente umfasst.

5. Verfahren nach dem vorhergehenden Anspruch,
wobei die Oxidationskomponente ausgewählt wird aus Kohlendioxid, Kohlenmonoxid, Schwefelwasserstoff, Schwefelkohlenstoff, Disauerstoff, Stickstoff, Chlor, Ammoniak und einer Mischung dieser Komponenten, vorzugsweise ausgewählt aus Disauerstoff, Stickstoff und einer Mischung dieser Komponenten, und weiter bevorzugt Luft ist.

6. Verfahren nach einem der vorhergehenden Ansprüche,
wobei das Verstärkungselement an einer Quelle des Plasmastroms vorbeigeführt wird.

7. Verfahren nach einem der vorhergehenden Ansprüche,
wobei, nach dem Schritt des Erhitzens des Teils des seitlichen Rands, das Verstärkungselement mit einem Haftkleber beschichtet wird.

8. Verfahren nach einem der vorhergehenden Ansprüche,
wobei das thermoplastische Polymer semikristallin ist.

9. Verfahren nach einem der vorhergehenden Ansprüche,
wobei das thermoplastische Polymer ausgewählt wird aus einem Polyester, einem Polyamid, einem Polyketon oder einer Mischung dieser Materialien, und vorzugsweise ein Polyester ist.

10. Verfahren nach einem der vorhergehenden Ansprüche,
wobei das Verstärkungselement (34, 34') eine Dicke (E) von 0,05 bis 1 mm, vorzugsweise von 0,10 bis 0,70 mm, aufweist.

11. Verfahren nach einem der vorhergehenden Ansprüche,
wobei das Verstärkungselement (34, 34') eine Breite (L) größer oder gleich 2,5 mm, vorzugsweise 5 mm und weiter bevorzugt 10 mm, aufweist.

12. Verfahren nach einem der vorhergehenden Ansprüche,
wobei der Querschnitt mit einer allgemein abgeflachten Form ein Aspektverhältnis größer oder gleich 5, vorzugsweise größer oder gleich 10, weiter bevorzugt 20 und noch weiter bevorzugt 30, aufweist.

13. Verfahren nach einem der vorhergehenden Ansprüche,
wobei das Verstärkungselement (34, 34') aus einem Film aus der Polymerzusammensetzung besteht.

14. Verfahren nach dem vorhergehenden Anspruch,
wobei der Film (35) multiaxial gestreckt wird.

15. Verfahren zur Herstellung eines Luftreifens,
**dadurch gekennzeichnet, dass** ein Verstärkungselement (34; 34') gemäß einem Verfahren nach einem der Ansprüche 1 bis 14 behandelt wird, und das Verstärkungselement (34; 34') in eine Elastomermatrix eingebettet wird.

## Claims

1. Process for treating a reinforcing element (34, 34') having a cross section with a flattened overall shape and extending in a main direction (Z1), and comprising at least one lateral edge (44, 46) made of a polymeric composition comprising a thermoplastic polymer, the lateral edge extending in a general direction substantially parallel to the main direction (Z1), **characterized in that** the process comprises a step of heating at least a part of the lateral edge, during which at least a part of the lateral edge is subjected to a plasma flow so as to raise the temperature of the part of the lateral edge (44, 46) above the melting point of the thermoplastic polymer.

2. Process according to the preceding claim, wherein the plasma flow is generated by means of a plasma torch.

3. Process according to either one of the preceding claims, wherein the plasma is of the cold plasma type.

4. Process according to any one of the preceding claims, wherein the plasma flow is generated from a gas comprising at least one oxidizing component.

5. Process according to the preceding claim, wherein the oxidizing component is chosen from carbon dioxide, carbon monoxide, hydrogen sulphide, carbon sulphide, dioxygen, nitrogen, chlorine, ammonia and a mixture of these components, preferably chosen from dioxygen, nitrogen and a mixture of these components, and more preferably is air.

6. Process according to any one of the preceding claims, wherein the reinforcing element is made to move with respect to a source of plasma flow.

7. Process according to any one of the preceding claims, wherein, subsequent to the step of heating the part of the lateral edge, the reinforcing element is coated with an adhesive.

8. Process according to any one of the preceding claims, wherein the thermoplastic polymer is semi-crystalline.

9. Process according to any one of the preceding claims, wherein the thermoplastic polymer is chosen from a polyester, a polyamide, a polyketone or a mixture of these materials, and is preferably a polyester.

10. Process according to any one of the preceding claims, wherein the reinforcing element (34, 34') has a thickness (E) ranging from 0.05 to 1 mm, preferably from 0.10 to 0.70 mm.

11. Process according to any one of the preceding claims, wherein the reinforcing element (34, 34') has a width (L) greater than or equal to 2.5 mm, preferably greater than or equal to 5 mm, and more preferably greater than or equal to 10 mm.

12. Process according to any one of the preceding claims, wherein the cross section with a flattened overall shape has an aspect ratio greater than or equal to 5, preferably greater than or equal to 10, more preferably greater than or equal to 20 and even more preferably greater than or equal to 30.

13. Process according to any one of the preceding claims, wherein the reinforcing element (34, 34') is made of a film of the polymeric composition.

14. Process according to the preceding claim, wherein the film (35) is multiaxially drawn.

15. Method for manufacturing a tyre, **characterized in that** a reinforcing element (34; 34') is treated in accordance with a process according to any one of Claims 1 to 14 and the reinforcing element (34; 34') is embedded in an elastomer matrix.
